# FASCICULE DE BREVET EUROPEEN

(11) **EP 2 170 973 B1**
(45) Date de publication et mention de la délivrance du brevet: **13.06.2018**
(21) Numéro de dépôt: 08826723.2
(22) Date de dépôt: 25.07.2008
(51) Int. Cl.: C08G 18/20, C09D 175/04, B01J 31/22, C08G 18/08, C08G 18/16, C08G 18/32, C08G 18/48, C08G 18/72, B01J 27/14, B01J 27/24, C08L 75/04

(54) **SYNTHÈSE D'URÉTHANES ET DE POLYURÉTHANES CATALYSÉES PAR DES CARBÈNES**
SYNTHESE VON DURCH CARBENE KATALYSIERTEN URETHANEN UND POLYURETHANEN
SYNTHESIS OF URETHANES AND OF POLYURETHANES CATALYSED BY CARBENES

(30) Priorité: 25.07.2007 FR 0756727
(43) Date de publication de la demande: 07.04.2010
(73) Titulaire: Vencorex France, 69800 Saint-Priest (FR); Centre National de la Recherche Scientifique (C.N.R.S.), 75016 Paris (FR)
(72) Inventeur: MIGNANI, Gérard, F-69008 Lyon (FR); DESTARAC, Mathias, F-75005 Paris (FR); TATON, Daniel, F-33750 Camarsac (FR); GNANOU, Yves, F-33400 Talence (FR); BACEIREDO, Antoine, F-31500 Toulouse (FR); KATO, Tsuyoshi, F-31400 Toulouse (FR); BONNETTE, Fabien, F-63720 Ennezat (FR); SIVASANKARAPILLAI, Gopakumar, Pulman, WA 99163 (US)
(74) Mandataire: Dennemeyer & Associates S.A.
(86) Numéro de dépôt international: PCT/FR2008/051403
(87) Numéro de publication internationale: WO 2009/016322

(56) Documents cités:
- WO-A-2005/113626
- US-A- 5 990 340
- DIDIER BOURISSON, OLIVIER GUERRET, FRANÇOIS P. GABBAI, AND GUY BERTRAND: "Stable Carbenes" CHEM.REV., vol. 100, 2000, pages 39-91, XP002467013
- MICHAEL K. DENK *, JOSÉ M. RODEZNO, SHILPI GUPTA, ALAN J. LOUGH: "Synthesis and reactivity of subvalent compounds Part.11 Oxidation, hydrogenation and hydrolysis of stable diamino carbenes" JOURNAL OF ORGANOMETALLIC CHEMISTRY, vol. 617-618, 2001, pages 242-253, XP002467014
- OTTO M ET AL: "MONO- AND DIAMINOCARBENES FROM CHLOROIMINIUM AND -AMIDINIUM SALTS: SYNTHESIS OF METAL-FREE BIS(DIMETHYLAMINO)CARBENE" JOURNAL OF THE AMERICAN CHEMICAL SOCIETY, AMERICAN CHEMICAL SOCIETY, WASHINGTON, DC, US, vol. 126, no. 4, 6 janvier 2004 (2004-01-06), pages 1016-1017, XP008044561 ISSN: 0002-7863
- ANTHONY J. ARDUENGO, III, RICHARD L.HARLOW, MICHAEL KLINE: "A stable Crystalline Carbene" J.AM.CHEM. SOC., vol. 113, 1991, pages 361-363, XP002467016

## Description

La présente invention a trait à un procédé de préparation de composés porteurs d'au moins une fonction uréthane, par réaction de composés porteurs de fonctions isocyanate et de composés porteurs de groupes hydroxyle, ce procédé étant tout particulièrement adapté à la synthèses de polyuréthanes.

La formation d'une fonction uréthane (fonction divalente de formule - O-C(=O)-NH-, dite également fonction carbamate), par réaction entre un groupe hydroxyle (-OH) et une fonction isocyanate (-N=C=O) est une réaction bien connue, qui a fait l'objet de nombreuse publications. Il est généralement admis qu'elle met en oeuvre le mécanisme de formation ci-dessous :

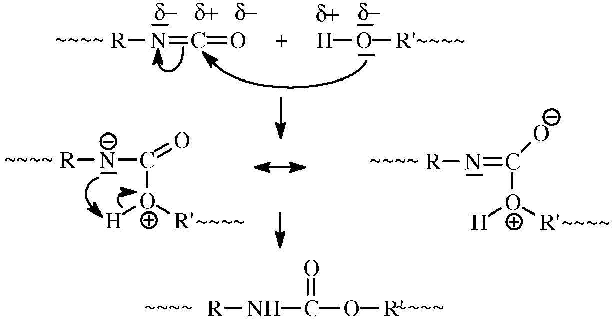

En mettant en oeuvre des composés porteurs d'au moins deux groupes isocyanate et des composés porteurs d'au moins deux groupe hydroxyle dans la réaction ci-dessus, on effectue une polymérisation conduisant à des polyuréthanes comprenant un enchaînement d'unités de type [-R-NH-CO-O-R'-O-CO-NH-].

Les réactions précitées de formation de fonctions uréthane sont certes généralement quantitatives, voire totales, et ce le plus souvent dès la température ambiante, en particulier lorsqu'on utilise des alcools primaires ou secondaires à titre de composés hydroxylés (et tout particulièrement lorsqu'on emploie des alcools primaires). Néanmoins, il est en général préconisé de catalyser ces réactions, et tout particulièrement lorsqu'il s'agit de réactions de formation de polyuréthanes.

La catalyse de la réaction vise notamment à minimiser les réactions parasites susceptibles d'engendrer des sous-produits indésirables. En effet, la fonction isocyanate, très réactive, réagit très facilement non seulement avec les groupes -OH, mais également avec toutes les espèces nucléophiles porteuses de protons labiles présentes dans le milieu réactionnel. En particulier, les fonctions isocyanate sont susceptibles de réagir avec l'eau pour former un acide carbamique instable, se dégradant en amine. L'amine ainsi formée peut elle-même réagir par la suite avec un autre groupe isocyanate, pour former une urée, qui, à son tour, peut s'additionner sur un autre groupe isocyanate pour former un biuret.

Pour catalyser des réactions de formation de fonctions uréthane, et notamment des réactions de synthèse de polyuréthane, il a notamment été proposé l'emploi de catalyseurs organométalliques, en particulier des composés organométalliques à base de métaux tels que l'étain, comme ceux décrits par exemple dans "Waferborne & Solvent Based Surface Coatings and their Applications", ISBN 0471 078868, Volume III: Polyurethanes, P.Ardaud, E.Charrière-Perroud, C.Varron, édité par P.Thomas, et publié en 1998 par SITA Technology Ltd. ,ou bien encore dans l'article *"*Structural engineering of polyurethane coatings for high performance applications" de Progress in Polymer Science, Volume 32, Issue 3, pages 352-418 D.K. Chattopadhyay and K.V.S.N. Raju (mars 2007).

Ces catalyseurs à base de métaux de type étain ne s'avèrent pas satisfaisants, et ce tout particulièrement lorsqu'on souhaite catalyser une réaction de synthèse de polyuréthanes. En effet, ces catalyseurs présentent une toxicité élevée, qui implique une gestion contrôlée de leur manipulation, notamment pour éviter un impact négatif sur l'environnement.

Par ailleurs, les métaux de ces catalyseurs sont également susceptibles de polluer les uréthanes synthétisés, ce qui s'avère tout particulièrement problématique dans la cas où on synthétise des compositions polymères, où les métaux tendent à se retrouver piégés de façon relativement irréversible, compromettant ainsi nombre des applications potentielles des compostions polymères obtenues.

Un but de la présente invention est de fournir un nouveau moyen de catalyser la réaction précitée de formation d'une fonction uréthane, permettant notamment de catalyser efficacement une réaction de synthèse de polyuréthane, mais en évitant les problèmes liés à la mise en oeuvre de catalyseurs à base de métaux tels que l'étain.

A cet effet, la présente invention a pour objet un procédé de préparation d'un composé comprenant au moins un groupe uréthane -HN-C(=O)-O, ledit procédé comprenant une étape (E) dans laquelle on fait réagir un composés (I) comprenant porteur de deux fonctions isocyanate -N=C=O (également désignée par -NCO dans la suite de la description) avec un composé organique (II) porteur de deux groupements hydroxyle -OH, cette réaction étant effectuée en présence d'un carbène (III) utilisé à titre de catalyseur.

L'invention vise également, selon un autre aspect, l'utilisation d'un carbène à titre de catalyseur de la réaction d'un composé (I) porteur de deux fonctions isocyanate -N=C=O avec un composé organique (II) porteur de deux groupements hydroxyle -OH, pour former un composé comprenant au moins un groupe uréthane -HN-C(=O)-O.

Un kit pour la préparation d'un composé comprenant au moins un groupe uréthane -HN-C(=O)-O est également décrit, ledit kit incluant :
- un composé (I) porteur de deux fonctions isocyanate -N=C=O, contenu dans un premier récipient ;
- un composé organique (II) porteur de deux groupements hydroxyle -OH, séparé du composé (I), contenu dans un deuxième récipient, distinct du premier récipient, ledit composé (II) étant isolé du composé (I) ;
- un carbène contenu dans un récipient, qui peut être le premier récipient, le deuxième récipient, ou bien encore un troisième récipient distinct des deux autres.

Ce kit peut être utilisé pour la mise en oeuvre de l'étape (E), en mélangeant ensemble les contenus des récipients du kit.

Selon un mode de réalisation possible, le kit inclut :
- un premier récipient (R1) contenant un composé (I) porteur de deux fonctions isocyanate -N=C=O en association avec un carbène;
- un deuxième récipient (R2) contenant un composé organique (II) porteur de deux groupements hydroxyle -OH, séparé du composé (I).

Alternativement, selon un autre mode de réalisation possible, le kit peut comprendre :
- un premier récipient (R1') contenant un composé (I) porteur de deux fonctions isocyanate -N=C=O;
- un deuxième récipient (R2') contenant un composé organique (II) porteur de deux groupements hydroxyle -OH en association avec un carbène, ledit composé (II) étant séparé du composé (I).

Au sens de la présente description, le terme *"carbène"* designe une espèce chimique, généralement neutre électriquement, comprenant un carbone divalent qui comporte deux électrons non liants, ces deux électrons non liants étant de préférence sous forme appariée (singulet), mais pouvant également être sous forme non appariée (triplet). Le plus souvent, un carbène au sens de l'invention est un carbène au sens le plus usuel du terme, à savoir une espèce comprenant 6 électrons de valence, et non chargée électriquement. Toutefois, au sens où elle est employée ici, la notion de carbène englobe également, des composés du type précité où le carbone divalent est porteur d'un doublet électronique supplémentaire ou bien engagé dans une liaison délocalisée et/ou dans lequel le carbone divalent est porteur d'une charge électrique (typiquement une charge négative éventuellement délocalisée).

Dans le cadre de la présente invention, les inventeurs ont maintenant mis en évidence qu'un carbène tel que défini ci-dessus assure une catalyse efficace de la réaction d'un groupe isocyanate avec un groupement hydroxyle. Sans vouloir être lié de façon rigide à une théorie particulière, les résultats des inventeurs indiquent que le carbène semble activer de façon particulièrement efficace la réactivité de la fonction carbonyle de l'isocyanate, le carbène exaltant vraisemblablement le caractère électrophile du carbone.

Outre le fait qu'il ne présente pas la toxicité des catalyseurs organométalliques à base d'étain, le carbène utilisé selon l'invention présente en outre l'avantage de permettre une catalyse à basse température, par exemple à température ambiante, le carbène ne nécessitant pas, en général, une activation thermique. Ainsi, l'étape (E) du procédé de l'invention est conduite à une température allant de 10 à 80°C, cette température étant, en règle générale, inférieure ou égale à 70°C, et le plus souvent inférieure ou égale à 60°C. Typiquement, l'étape (E) est conduite à une température allant de 15 à 60°C, par exemple aux alentours de 40 à 50°C.

Le procédé de l'invention peut avantageusement être mis en oeuvre pour la préparation de polyuréthanes.

L'étape (E) du procédé de l'invention met en oeuvre :
- des composés (I) comprenant au moins un composé porteur de deux groupe isocyanate NCO (éventuellement en mélange avec des composés (I) porteurs d'une seule fonction isocyanate), et
- des composés (II) comprenant au moins un composé porteur de deux groupes hydroxyle -OH (éventuellement en mélange avec des composés (I) porteurs d'une seule fonction -OH).

Dans l'étape (E), on fait réagir des composés (I) porteurs de deux groupes isocyanate -NCO avec des composés (II) porteurs de deux groupes hydroxyle - OH.

Les inventeurs ont par ailleurs mis en évidence que, lorsqu'il est mis en oeuvre pour la préparation de polymères polyuréthanes, le procédé de l'invention permet de conduire sélectivement soit à des polyuréthanes de type solubilisables (ayant généralement une structure linéaires ou très légèrement ramifiée), soit à des polyuréthanes de type insolubilisable (qui ont eux une structure tridimensionnelle complexe, réticulée ou gélifiée).

Par *"polyuréthane solubilisable"*, on entend ici un polymère capable de conduire à une solution monophasique (généralement transparente), lorsqu'il est introduit dans un solvant approprié, la viscosité de cette solution étant ajustable en fonction de la quantité de solvant employée. Un polymère solubilisable de ce type a en général une structure de type linéaire, à savoir une structure essentiellement monodimensionnelle, essentiellement constitué par un enchaînement linéaire d'unités monomères divalentes liées entre elles par des fonctions uréthanes. Néanmoins, certains polymères solubles peuvent présenter un faible degré de ramification, la ramification ne nuisant pas nécessairement au caractère soluble du polymère.

A l'inverse, un *"polyuréthane insolubilisable"* désigne un polymère insoluble dans tout solvant, comprenant généralement un enchaînement d'unités monomères au moins en partie trivalentes, liées entre elles par des fonctions uréthanes et se présentant le plus souvent sous la forme de compositions de structure complexe, typiquement gélifiés et/ou réticulés, ce qui leur confère leur caractère insoluble.

L'accès à des polyuréthanes linéaires ou, au contraire, à structure tridimensionnelle peut être contrôlé selon l'invention par un choix adapté de paramètres de mise en oeuvre de l'étape (E) du procédé, incluant en particulier le degré de fonctionnalisation des monomères, l'ordre d'addition des composés (I), (II) et (III) dans le milieu réactionnel, et, dans certains cas, la quantité de carbène introduite et éventuellement la température.

Plus précisément, en fonction de la nature du polymère dont la synthèse est recherchée, on met préférentiellement en oeuvre le procédé de l'invention dans les conditions suivantes :

### ▪ lorsqu'on souhaite synthétiser des polyuréthanes solubilisables :

Bien que cela ne soit pas systématiquement requis, il est préconisé dans ce cadre d'employer dans l'étape (E) du procédé des composés difonctionnels à titre de composés (I) et (II), éventuellement en association avec des composés monofonctionnels, mais à l'exclusion de composés porteurs de plus de deux fonctions -OH et/ou -NCO au sein d'une même molécule. En d'autres termes, au sein du milieu de l'étape (E), dans chacun des composés présents, la somme du nombre de fonctions -NCO et du nombre de fonctions -OH est de préférence au plus égal à 2. A cet effet, on utilise le plus souvent des composés (I) porteurs d'exactement 2 groupes isocyanate qu'on fait réagir avec des composés porteurs d'exactement 2 groupes -hydroxyle.

Selon un mode de réalisation avantageux pour synthétiser des polyuréthanes de type solubilisable, on emploie des composés difonctionnels à titre de composés (I) et (II), éventuellement en association avec des composés monofonctionnels, et l'étape (E) comprend l'addition des composés (I) dans un pied de cuve, ce pied de cuve contenant :
- les composés (II) porteur de groupes hydroxyle -OH ; et
- un carbène (III).

Dans le cadre plus spécifique de l'utilisation de composés (I) aromatiques (comme dans le toluène diisocyanate, par exemple), les inventeurs ont par ailleurs constaté que, notamment pour éviter des phénomènes de réticulation et/ou de gélification, il est en outre préférable de conduire le procédé dans des conditions spécifiques, parmi lesquelles on peut citer les deux variantes préférentielles, non limitatives, décrites ci-dessous :

### - Première Variante utile pour des composés (I) aromatiques :

### ordre d'addition des composés de type (II)+(III), puis (I) avec contrôle de la quantité de catalyseur introduite

Selon cette première variante permettant l'accès à des polyuréthanes solubilisables à partir de composés (I) aromatiques, l'étape (E) du procédé comprend l'addition d'un composé (I) aromatique comportant exactement deux groupes isocyanate -NCO, dans un pied de cuve où on a préalablement mélangé un composé (II) comportant exactement deux groupe hydroxyle -OH avec un carbène (III), le ratio molaire carbène/NCO de la quantité totale de carbène introduite rapporté à la quantité totale de fonctions isocyanate -NCO introduite étant inférieur à 0,002, avantageusement inférieur à 0,0015, plus préférentiellement inférieur ou égal à 0,001 (par exemple entre 0,0001 et 0,001).

Dans le cadre de cette première variante, il s'avère nécessaire d'utiliser une quantité limitée de catalyseur carbène. Les inventeurs ont en effet constaté que, selon cette variante du procédé, une quantité trop importante de catalyseur induit une gélification du milieu réactionnel, qui est vraisemblablement due à une réticulation des fonctions isocyanate, cette gélification s'avérant en outre d'autant plus rapide que le ratio carbène/NCO précité augmente. Le ratio carbène/NCO limite pour lequel on commence à observer une gélification dépend bien entendu de la nature exacte des composés (I) et (II) employés. Néanmoins, dans la plupart des cas, on évite la gélification en se plaçant dans les gammes préférentielles de ratio molaire carbène /NCO indiquées ci-dessus, et ce tout particulièrement lorsque ce ratio est inférieur à 0,0015.

Par ailleurs, toujours pour éviter le phénomène de gélification du milieu, il est préférable, selon cette variante particulière du procédé, de conduire l'étape (E) à faible température, de préférence à moins de 40°C, plus préférentiellement à moins de 30°C typiquement entre 15 et 25°C.

Selon cette première variante, les composés (I) aromatiques comportant exactement deux groupes isocyanate et (II) comportant exactement deux groupe hydroxyle peuvent éventuellement être utilisés en association avec des composés monofonctionnels (en particulier des monoalcools), mais il est exclu selon cette variante d'employer des composés porteurs de plus de deux fonctions -OH et/ou -NCO au sein d'une même molécule. Selon un mode de réalisation particulier de la première variante, on emploie uniquement des composés (I) aromatiques comportant exactement deux groupes isocyanate et des composés (II) comportant exactement deux groupe hydroxyle, à l'exclusion d'autres composés porteurs de fonctions hydroxyle et/ou isocyanate.

### - Deuxième Variante utile pour des composés (I) aromatiques:

### Ordre d'addition des composés de type d'abord (I)+(II), puis (III)

Selon cette deuxième variante permettant l'accès à des polyuréthanes solubilisables à partir de composés (I) aromatiques, le procédé de l'invention comprend une étape (E⁰) préalable à l'étape (E), dans laquelle on fait réagir des composés (I) aromatiques ayant exactement deux groupes isocyanate -NCO et des composés (II) ayant exactement deux groupes hydroxyle -OH, en l'absence de carbène (III) (et, le plus souvent sinon systématiquement, en l'absence de tout catalyseur), l'étape (E) étant ensuite conduite en ajoutant au milieu obtenu à l'issue de l'étape (E⁰) le carbène (III), avec éventuellement une addition conjointe de composés (I) et/ou (II) additionnels, identiques ou différents de ceux mis en oeuvre dans l'étape (E⁰).

Dans l'étape (E⁰) de cette deuxième variante spécifique, on forme généralement des prépolymères (PNCO) porteurs de deux groupes isocyanate terminaux et/ou des prépolymères (POH) porteurs de deux groupes hydroxyle terminaux. Les prépolymères PNCO sont à même de jouer le rôle de composés diisocyanatés dans l'étape (E), au même titre que les composés (I). De même, les prépolymères POH sont à même de jouer le rôle de composés dihydroxylés dans l'étape (E) au même titre que les composés (II).

Les inventeurs ont maintenant mis en évidence qu'en employant les conditions particulières de la deuxième variante, on arrive à inhiber le phénomène de gélification.

Dans le cadre de cette deuxième variante, il s'avère souvent avantageux de conduire l'étape (E) avec un ratio molaire carbène/NCO de la quantité totale de carbène introduite rapporté à la quantité totale de fonctions isocyanate -NCO introduite inférieur à 0,05, avantageusement inférieur à 0,02, plus préférentiellement inférieur ou égal à 0,01, par exemple entre 0,001 et 0,01.

Par ailleurs, il se révèle souvent avantageux de conduire les étape (E⁰) et (E) de cette deuxième variante à une température inférieure ou égale à 60°C, de préférence à moins de 50°C, plus préférentiellement encore à moins de 30°C, par exemple entre 15 et 30°C.

Là encore, les composés (I) aromatiques comportant exactement deux groupes isocyanate et (II) comportant exactement deux groupe hydroxyle peuvent éventuellement être utilisés en association avec des composés monofonctionnels (en particulier des monoalcools), mais il est exclu selon cette variante d'employer des composés porteurs de plus de deux fonctions -OH et/ou -NCO au sein d'une même molécule. Selon un mode de réalisation particulier de la deuxième variante, on emploie uniquement des composés (I) aromatiques comportant exactement deux groupes isocyanate et des composés (II) comportant exactement deux groupe hydroxyle, à l'exclusion d'autres composés porteurs de fonctions hydroxyle et/ou isocyanate.

La synthèse de polyuréthanes solubilisables selon l'invention, notamment au moyen des variantes préférentielles décrites ci-dessus, peut avantageusement être employée pour la préparation de polyuréthanes thermoplastiques, par exemple des polyuréthanes thermoplastiques comprenant des alternances d'unités monomères rigides et d'unités monomères souples.

Plus spécifiquement, la variante précitée, mettant en oeuvre la succession d'étapes (E⁰) et (E) peut avantageusement être mise en oeuvre pour synthétiser des polyuréthanes linéaires ayant une structure séquencée (copolymère de type "à blocs"). A cet effet, dans l'étape (E⁰), on met typiquement en oeuvre les composés (I) et (II) avec un ratio molaire NCO/OH, correspondant au nombre de groupes isocyanate introduits rapporté au nombre de groupes hydroxyle introduits, supérieur à 1 (par exemple avec un ratio molaire NCO/OH entre 0,8 et 1,2), et, dans l'étape (E) on ajoute des composés dihydroxylés (II) distincts de ceux de l'étape (E⁰). Dans ces conditions, on crée schématiquement, dans l'étape (E⁰), des "coeurs" polymères sur lesquels on greffe dans l'étape (E) des chaînes polymères ("bras terminaux" ou "liens inter-coeurs") de nature chimique différente de celle des coeurs.

### ▪ lorsqu'on souhaite des polyuréthanes insolubilisables

Dans le cas spécifique de l'emploi de composés (I) aromatiques, une solution pour obtenir des polyuréthanes insolubilisables consiste à employer la Première Variante telle décrite plus haut dans la présente description pour la synthèse de polymères solubilisables, mais en employant *a contrario* une quantité plus élevée de catalyseur, de façon à se placer dans des conditions où le ratio molaire carbène/NCO est supérieur à la valeur limite à partir de laquelle on commence à observer la réticulation. En général, on obtient le résultat escompté lorsqu'on utilise un ratio supérieur à 0,003, ce ratio étant avantageusement supérieur ou égal à 0,005.

La préparation de polyuréthanes insolubilisables (gélifiés ou réticulés) selon le procédé de l'invention peut notamment être employée pour la synthèse de mousses souples ou rigides. A cet effet, selon des techniques bien connues du domaine (décrites notamment dans *"*Waterborne & Solvent Based Surface Coatings and their Applications", ISBN 0471 078868, Volume III: Polyurethanes, P.Ardaud, E.Charrière-Perroud, C.Varron, édité par P.Thomas, et publié en1998 par SITA Technology Ltd. ,ou bien encore dans "Structural engineering of polyurethane coatings for high performance applications" Progress in Polymer Science, Volume 32, Issue 3, pages 352-418 D.K. Chattopadhyay and K.V.S.N. Raju (mars 2007)), on peut typiquement employer des agents porogènes, générer de l'anhydride carbonique *in situ* par addition contrôlée d'eau sur un excès de diisocyanate ou bien encore employer un solvant volatil tel que le trichlorofluorométhane, ou CH2Cl2 et le vaporiser par chauffage.

Différents aspects spécifiques et modes de réalisation préférentiels du procédé de l'invention vont maintenant être décrits plus en détails.

### Le carbène (III) utilisé

Le carbène (III) employé dans l'étape (E) du procédé de l'invention est spécifiquement mis en en oeuvre à titre de catalyseur de la réaction d'un groupe isocyanate porté par un composé (I) avec un groupe hydroxyle porté par un composé (II).

Le plus souvent, le milieu réactionnel de l'étape (E) ne contient pas d'autre catalyseur que le carbène (III). En particulier, le plus souvent, ce milieu réactionnel ne contient pas de catalyseurs organométalliques.

Il est par ailleurs à noter que les carbènes présents dans le milieu réactionnel de l'étape (E) sont, en général, tous disponibles à titre de catalyseur, et que, le plus souvent, aucun des carbènes présents ne jouent le rôle, par exemple, de ligand dans un complexe organométallique.

Pour ce qui est de la leur nature chimique exacte, il est à noter que la plupart des carbènes permettent d'obtenir les résultats recherchés dans le cadre de la présente demande. Toutefois, avantageusement, le carbène (III) employé dans l'étape (E) du procédé de l'invention présente l'une au moins des caractéristiques préférentielles exposées ci-après.

Le carbène (C) utilisé comporte, en α de son carbone divalent, un hétéroatome choisi parmi N, S, P, Si et O. Avantageusement, dans ce cadre, le carbène (III) répond à la formule générale (III-1) ci-dessous : 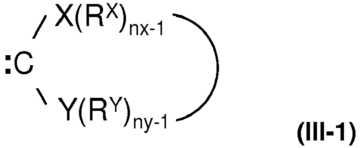 dans laquelle :
- X est un atome d'azote ;
- Y est un hétéroatome choisi parmi N, S, P, Si et O ;
- nx et ny sont deux entiers, égaux respectivement à la valence de l'hétéroatome X et la valence de l'hétéroatome Y (à savoir 2 lorsque l'hétéroatome est S ou O ; 3 lorsque l'hétéroatome est N ou P ; et 4 lorsque l'hétéroatome est Si) ;
- chacun des groupes R^{X} et R^{Y} liés aux hétéroatomes X et Y représente, indépendamment des autres groupes, une chaîne hydrocarbonée, linéaire ou ramifiée, éventuellement cyclisée en tout ou partie, et éventuellement substituée, cette chaîne étant de préférence :
   - un groupe alkyle, alcényle ou alcynyle, linéaire ou ramifié éventuellement substitué, par exemple par au moins un groupe perfluoroalkyle,
   - un groupe perfluoroalkyle, linéaire ou ramifié ;
   - un groupe cycloalkyle, éventuellement substitué, par exemple par au moins un groupe alkyle ou alcoxy ;
   - un groupe aryle éventuellement substitué, par exemple par au moins un groupe alkyle ou alcoxy ;
   - un groupe alkylaryle ou arylalkyle, où la partie aryle est éventuellement substituée, par exemple par au moins un groupe alkyle ou alcoxy,
étant entendu qu'un des groupes R^{X} porté par l'hétéroatome X et un des groupes R^{Y} porté par l'hétéroatome Y peuvent éventuellement être lié ensemble pour former un hétérocycle avec les hétéroatomes X et Y et le carbone divalent porteur de deux électrons non liants. Dans ce cas de, figure l'hétérocycle ainsi formé comporte de préférence de 5 à 7 chaînons.

Le carbène utilisé est un carbène dit NHC (carbène N-hétérocyclique).

Selon un mode de réalisation tout particulièrement intéressant, le carbène (III) est un carbène NHC du type précité répondant à l'une des formules générales (I-1.1) ou (I-1.1') ci-dessous : 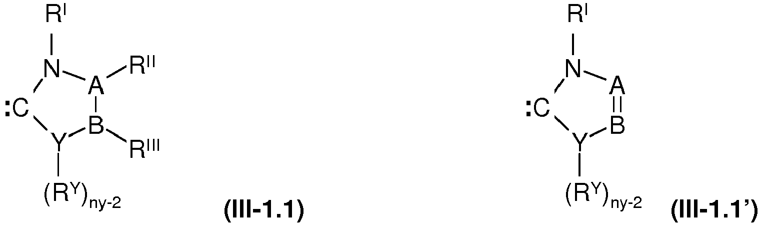 dans lesquelles :
- Y est un hétéroatome choisi parmi N, S, P, Si et O, Y étant de préférence un atome d'azote ;
- ny et R^{Y} ont les définitions précitées ; et
- R^{I} désigne une chaîne hydrocarbonée, linéaire ou ramifiée, éventuellement cyclisée en tout ou partie, et éventuellement substituée, cette chaîne étant de préférence :
   - un groupe alkyle, alcényle ou alcynyle, linéaire ou ramifié éventuellement substitué, par exemple par au moins un groupe perfluoroalkyle,
   - un groupe perfluoroalkyle, linéaire ou ramifié ;
   - un groupe cycloalkyle, éventuellement substitué, par exemple par au moins un groupe alkyle ou alcoxy ;
   - un groupe aryle éventuellement substitué, par exemple par au moins un groupe alkyle ou alcoxy ;
   - un groupe alkylaryle ou arylalkyle, où la partie aryle est éventuellement substituée, par exemple par un groupe alkyle ou alcoxy
- A désigne un atome d'azote ou un groupement CR^{IIa},,
- B désigne un atome d'azote ou un groupement CR^{IIIa},
- R^{II} et R^{III}, et ; le cas échéant, R^{IIa} et R^{IIIa}, identiques ou différents, désignent chacun un atome d'hydrogène, ou bien une chaîne hydrocarbonée, linéaire ou ramifiée, éventuellement cyclisée en tout ou partie, et éventuellement substituée. Dans le cas où R^{II}, R^{III}, R^{IIa} ou R^{IIIa} représente une chaîne hydrocarbonée, cette chaîne hydrocarbonée étant de préférence :
   - un groupe alkyle, alcényle ou alcynyle, linéaire ou ramifié éventuellement substitué, par exemple par au moins un groupe perfluoroalkyle,
   - un groupe perfluoroalkyle, linéaire ou ramifié ;
   - un groupe cycloalkyle, éventuellement substitué, par exemple par au moins un groupe alkyle ou alcoxy ;
   - un groupe aryle éventuellement substitué, par exemple par au moins un groupe alkyle ou alcoxy ;
   - un groupe alkylaryle ou arylalkyle, où la partie aryle est éventuellement substituée, notamment par au moins un groupe alkyle ou alcoxy.

Selon un mode de réalisation encore plus avantageux, le carbène (III) employé répond à l'une des formules générales (III.1.1a) ou (III.1.1a') ci-dessous : 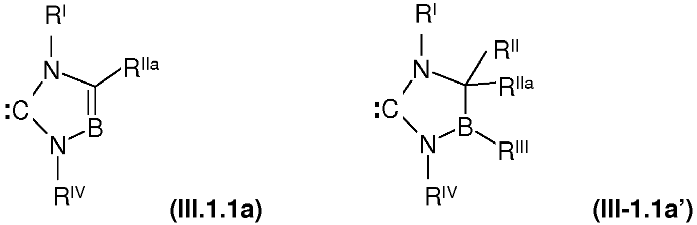 dans lesquelles :
- R^{I}, R^{II}, R^{IIa}, R^{III} et B sont tels que définis précédemment ; et
- R^{IV} désigne une chaîne hydrocarbonée, linéaire ou ramifiée, éventuellement cyclisée en tout ou partie, et éventuellement substituée, cette chaîne étant de préférence :
   - un groupe alkyle, alcényle ou alcynyle, linéaire ou ramifié éventuellement substitué, par exemple par au moins un groupe perfluoroalkyle,
   - un groupe perfluoroalkyle, linéaire ou ramifié ;
   - un groupe cycloalkyle, éventuellement substitué, par exemple par au moins un groupe alkyle ou alcoxy ;
   - un groupe aryle éventuellement substitué, par exemple par au moins un groupe alkyle ou alcoxy ;
   - un groupe alkylaryle ou arylalkyle, où la partie aryle est éventuellement substituée, notamment par au moins un groupe alkyle ou alcoxy.

De façon particulièrement intéressante, le carbène (III) répond à la formule (III-1.1a) précitée.

Alternativement, selon un autre mode de réalisation envisageable, le carbène (III) peut être un composé choisi parmi les phosphino(amino)carbènes de formule (III.2) : 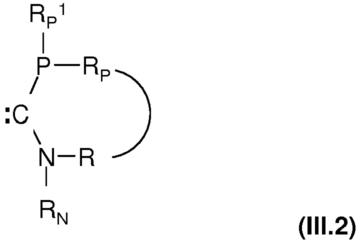 où chacun des groupes R, R_{P}, R_{N}, et R_{P}1 représente, indépendamment des autres groupes, une chaîne hydrocarbonée, linéaire ou ramifiée, éventuellement cyclisée en tout ou partie, et éventuellement substituée, cette chaîne étant de préférence :
- un groupe alkyle, alcényle ou alcynyle, linéaire ou ramifié éventuellement substitué, par exemple par au moins un groupe perfluoroalkyle,
- un groupe perfluoroalkyle, linéaire ou ramifié ;
- un groupe cycloalkyle, éventuellement substitué, par exemple par au moins un groupe alkyle ou alcoxy ;
- un groupe aryle éventuellement substitué, par exemple par au moins un groupe alkyle ou alcoxy ;
- un groupe alkylaryle ou arylalkyle, où la partie aryle est éventuellement substituée, par exemple par au moins un groupe alkyle ou alcoxy
étant entendu que, dans la formule (III.2) le groupe R et le groupe R^{P} peuvent éventuellement être liés ensemble pour former un hétérocycle avec les deux hétéroatomes auxquels ils sont liés et le carbone divalent (le cas échéant, l'hétérocycle ainsi formé comporte de préférence de 5 à 7 chaînons).

Dans le cadre de la présente description, on entend par "alkyle", une chaîne hydrocarbonée linéaire ou ramifiée en C₁-C_{15,} de préférence en C₁-C₁₀.et encore plus préférentiellement en C₁-C₄. Des exemples de groupes alkyle préférés sont notamment méthyle, éthyle, propyle, isopropyle, butyle, isobutyle, t-butyle.

Par "alcoxy", on entend un groupe alkyl-O- dans lequel le terme alkyle a la signification donnée ci-dessus. Des exemples préférés de groupes alcoxy sont les groupes méthoxy ou éthoxy.

Par "alcoxycarbonyl", on fait référence au groupe alcoxy-C(O)- dans lequel le groupe alcoxy a la définition donnée précédemment.

Par "alcényle", on entend une chaîne hydrocarbonée linéaire ou ramifiée comprenant une double liaison en C₂-C₈, de préférence en C₂-C₆.et encore plus préférentiellement en C₂-C₄. Des exemples de groupes alcényle préférés sont notamment les groupes vinyle, 1-propényle, 2-propényle, isopropényle, 1-butényle, 2-butényle, 3-butényle et isobutényle.

Par "alcynyle", on entend une chaîne hydrocarbonée linéaire ou ramifiée comprenant une triple liaison en C₂-C₈, de préférence en C₂-C₆.et encore plus préférentiellement en C₂-C₄. Des exemples de groupes alcynyle préférés sont notamment les groupes éthynyle, 1-propynyle, 1-butynyle, 2-butényle.

Par "alcényloxy" et "alcynyloxy", on entend respectivement un groupe alcényl-O- et alcynyl-O- dans lesquels les termes alcényle et alcynyle ont la signification donnée précédemment.

Par "cycloalkyle", on entend un groupe hydrocarboné cyclique, monocyclique en C₃-C₈, de préférence, un groupe cyclopentyle ou cyclohexyle ou polycyclique (bi- ou tricyclique) en C₄-C₁₈, notamment adamantyle ou norbornyle.

Par "aryle", on entend un groupe mono- ou polycyclique aromatique, de préférence, mono- ou bicyclique en C₆-C₂₀, de préférence, phényle ou naphtyle. Lorsque le groupe est polycyclique c'est-à-dire qu'il comprend plus d'un noyau cyclique, les noyaux cycliques peuvent être condensés deux à deux ou rattachés deux à deux par des liaisons σ. Des exemples de groupes (C₆-C₁₈)aryle sont notamment phényle, naphtyle.

Par "aryloxy", on entend un groupe aryl-O- dans lequel le groupe aryle a la signification donnée précédemment.

Par "arylalkyle", on entend un groupe hydrocarboné, linéaire ou ramifié porteur d'un cycle aromatique monocyclique en C₇-C₁₂, de préférence, benzyle : la chaîne aliphatique comprenant 1 ou 2 atomes de carbone

Quelle que soit sa nature exacte, le carbène (III) utilisé dans le procédé de l'invention peut être un carbène qui a été préformé dans une étape préalable à l'étape (E). Il s'agit dans ce cadre d'un carbène dit "nu", qui est généralement conservé sous atmosphère inerte et non réactive (généralement anhydre), préalablement à la mise en oeuvre de l'étape (E), typiquement sous azote ou sous argon, généralement en boite à gants, le plus souvent dans un milieu solvant tel que le toluène, par exemple.

Alternativement, le carbène (III) peut être formé *in situ* dans le milieu de l'étape (E), à partir d'au moins un précurseur (PC) dudit carbène (forme "masquée" du carbène). Dans ce cas de figure, le précurseur de carbène employé peut notamment être choisi parmi l'un au moins des précurseurs suivants :
- un carbène sous forme dimérisée, qui est clivé en deux carbènes *in situ* par activation thermique, ce carbène dimérisé répondant avantageusement à la formule (PC_{D}) suivante : 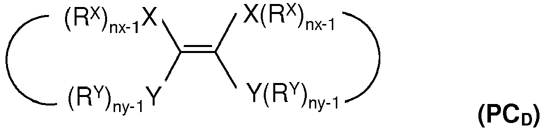 où X, Y, nx, ny, R^{X} et R^{Y} ont les définitions précitées ;
- un sel d'imidazolium, qui forme un carbène *in situ* par réaction avec une base. La base employée peut notamment être une amine tertiaire (comme la triéthylamine par exemple) ou bien un alcoolate (tBuOK notamment) ou encore un alkyl lithium (tel que BuLi). Les sels d'imidazolium utilisés à titre de précurseurs de carbène selon l'invention répondent avantageusement à l'une des formule (PC_{S}) ou (PC_{S}') suivantes : 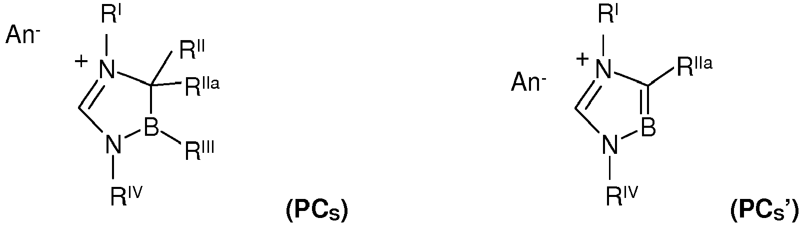 dans lesquelles :
   B, R^{I}, R^{II}, R^{III} et R^{IV} ont les définitions précitées ; et
   An⁻ est un anion derivé d'un acide de Brönsted, avantageusement un anion carboxylate, sulfate, hydrogenosulfate, sulfonate, phosphate, hydrogenophosphate, halogénure, perchlorate ou borate ;
- un adduit de carbène et d'alcool, qui libère *in situ* le carbène lorsqu'il est traité thermiquement.

Selon un mode de réalisation particulier, le carbène employé peut être un carbène encapsulé, à savoir mélangé physiquement à un polymère lui servant de gangue protectrice. Avantageusement, le polymère protecteur utilisé dans ce cadre est une huile de silicone.

### Les composés (I) porteurs de groupements isocyanate

De nombreux composés porteurs de groupements isocyanates peuvent être employés à titre de composés (I) dans le cadre de la présente invention.

On préfère en général utiliser des composés (I) solubilisables, ayant une masse moléculaire faible. Selon certains mode de réalisation particuliers, il est néanmoins également envisageable d'employer des molécules de tailles plus importantes à titre de composés (I), par exemple des oligomères ou même des polymères.

Avantageusement, les composés (I) mis en oeuvre dans l'étape (E) du procédé de l'invention sont des composés de type diisocyanates, répondant de préférence à la formule (I-1) suivante :

**O=C=N-R^{I}-N=C=O** **(I-1)**

dans laquelle R^{I} est un groupe alkylène, cycloalkylène ou arylène, ou un groupement divalent contenant un enchaînement de tels groupes.

Lorsque R^{I} est un groupe alkylène, il comprend une chaîne hydrocarbonée linéaire ou ramifiée, comprenant de préférence de 1 à 16 atomes de carbone, par exemple de 2 à 10 et typiquement de l'ordre de 6 atomes de carbone. Comme exemples de tels groupes, on peut citer notamment, le groupe méthylène, hexaméthylène, méthylpentaméthylène ou 2,4,4-triméthylhexaméthylène.

Lorsque R^{I} est un groupe cycloalkylène, il s'agit de préférence d'un cycle carboné saturé, ayant généralement 5 ou 6 atomes de carbone dans le cycle, par exemple un ,4-cyclohexylène, ou un méthylcyclohexylène, ce cycloalkylène étant éventuellement substitué par 1 à 4 substituants.

Lorsque R^{I} est un groupe arylène, il s'agit de préférence d'un phénylène ou naphtylène, éventuellement substitué. Comme exemples de groupes arylène préférés, on peut citer le groupe phénylène, tolylène ou xylène, et plus particulièrement les groupes aromatiques divalents suivants :

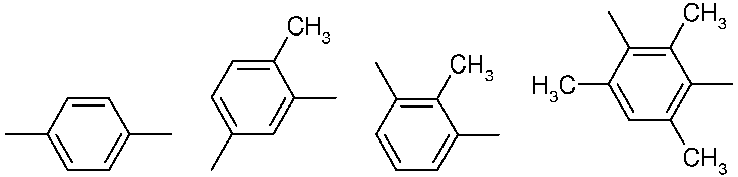

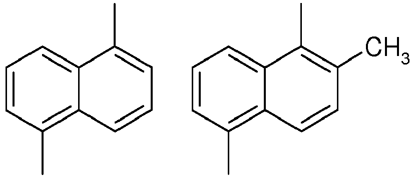

Lorsqu'un substituant est présent sur les groupes cycloalkylène et arylène précité, ce substituant peut être choisi indépendamment des autres substituants éventuellement présents, dans la mesure où il ne gêne pas la réaction. Le cas échéant, chacun des substituants présents est de préférence avantageusement choisi parmi un groupe alkyle ou alcoxy ayant de 1 à 4 atomes de carbone (de préférence un groups méthyle, éthyle ou méthoxy), un atome d'halogène (fluor, chlore, brome, iode, de préférence fluor), et un groupe perfluoroalkyle, de préférence en C₁ à C₂ (avantageusement un groupe trifluorométhyle).

Le groupe R^{I} peut aussi être choisi parmi les enchaînements suivants de groupes alkylène et cycloalkylène :

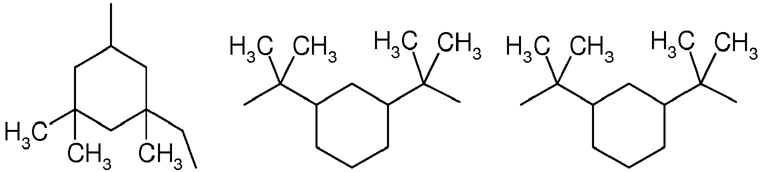

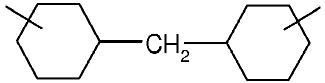

R^{I} peut aussi comprendre un enchaînement de groupes aromatiques, notamment des groupes biphényle éventuellement séparés par un groupe alkylène ou alkylidène ayant de 1 à 4 atomes de carbone ou par un hétéroatome, de préférence l'oxygène ou un groupe fonctionnel de préférence un groupe carbonyle : les groupes phényle pouvant porter des substituants. A titre illustratif, on peut citer les groupes divalents suivants : 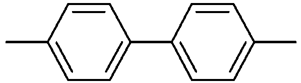 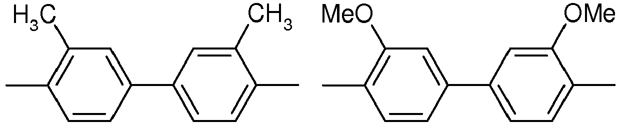 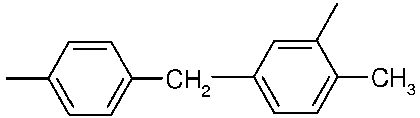 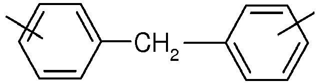 où, dans la dernière formule, les valences sont en position 2,2', 2,4', 3,4', 4,4' de préférence en position 4,4'.

A titre de composé (I) bien adapté dans la cadre de la présente invention, on peut notamment citer :
- Le toluène diisocyanate (TDI) ;
- l'isophoronediisocyanate (IPDI)
- l'hexaméthylènediisocyanate (HDI)
- le diphénylméthanediisocyanate (MDI) ;
- le dicyclohexylméthanediisocyanate (DCI) ;
- Le naphthalène 1,5-diisocyanate (NDI),
- le p-phénylène diisocyanate (PPDI),
- le 3,3'-diméthyldiphenyl-4, 4'-diisocyanate (DDDI),
- le 4,4'-dibenzyl diisocyanate (DBDI).

Bien que cela ne s'avère généralement pas nécessaire dans le cadre de l'invention, il est possible, selon certains modes de réalisation particuliers de l'invention, que tout ou partie des fonctions isocyanates portées par les composés 5i) soient introduites dans le milieu réactionnel sous une forme masquée, qui est ensuite convertie *in situ* en isocyanate, généralement par chauffage à des températures de l'ordre de 50 à 170°C. La mise en oeuvre de l'isocyanate sous forme masquée permet un meilleur contrôle de la réactivité.

Les fonctions isocyanate peuvent être masquées selon des techniques bien connues en soi, décrites notamment dans Waterborne & Solvent Based Surface Coatings and their Applications", ISBN 0471 078868, Volume III: Polyurethanes, P.Ardaud, E.Charrière-Perroud, C.Varron, édité par P.Thomas, et publié en1998 par SITA Technology Ltd. A titre de forme masquée d'isocyanate, on peut par exemple utiliser des dimères ou trimères de diisocyanates cyclisés sous la forme d'isocyanurates, ou bien en protéger la fonction isocyanate par réaction avec un composé de type phénol, oxime, caprolactame, imidazoline, tétrahydropyrimidine, imidazole, ou bien encore pyrazole.

### Les composés organiques hydroxylés (II):

Là encore, on préfère en général utiliser des composés (II) solubilisables, ayant une masse moléculaire faible. Selon certains modes de réalisation particuliers, il est néanmoins également envisageable d'employer des molécules de tailles plus importantes à titre de composés (II), par exemple des oligomères ou même des polymères, par exemple des polymères polyol acryliques, des polyesters polyols, ou des polyéther polyol, étant entendu que ces polymères ne doivent de préférence pas comporter de fonctions chimiques susceptibles de réagir désavantageusement sur les carbènes employés à titre de catalyseur.

Le plus souvent, les composés (II) mis en oeuvre dans l'étape (E) du procédé de l'invention sont porteurs de fonctions alcool primaire, alcool secondaire, alcool tertaire et/ou phénol. On préfère en général que les composés (II) soient porteurs d'au moins un groupement alcool primaire ou secondaire, avantageusement primaire.

Dans le cadre de la préparation de polyuréthanes, les composés (II) utilisés selon l'invention sont porteurs de deux fonctions OH. Dans ce cadre, on utilise des diols à titre de composé (II), de préférence choisis parmi le glycol, le propanediol, le butanediol ou bien encore un polyéthyleneglycol non ramifié.

### Conditions de mise en oeuvre de l'étape (E)

Dans l'étape (E) du procédé de l'invention, le ratio molaire NCO/OH, qui correspond à la quantité de fonctions isocyanate introduites rapporté à la quantité de fonctions alcool introduites, est généralement compris entre 0,8 et 1,2, ce ratio étant de préférence supérieur ou égal à 1. On peut notamment travailler à la stoechiométrie avec un ratio égal à 1.

Par ailleurs, de façon générale, le ratio molaire carbène/NCO, qui correspond à la quantité de carbène introduit rapporté à la quantité de fonctions isocyanate introduites, est le plus souvent entre 0,0001 et 0,005 , typiquement entre 0,0002 et 0,002, plus préférentiellement entre 0,0005 et 0,0015.

Typiquement, l'étape (E) du procédé de l'invention est en milieu solvant organique, en particulier lorsqu'il s'agit d'une étape de polymérisation. Le solvant utilisé dans ce cadre ne doit bien entendu pas être susceptible de remettre en cause la stabilité ou l'efficacité du carbène, et il est de préférence polaire. A cet effet, on préfère conduire l'étape (E) au sein d'un solvant choisi parmi un éther aliphatique, par exemple THF ou dioxanne ou leurs mélanges. On peut également utiliser d'autres solvants organiques, tels que le toluène, les hydrocarbures chlorés (en particulier CH2Cl2 ou CHCl3), ou l'anisole, seuls ou en combinaison, et éventuellement en mélange avec un éther aliphatique du type précité.

La concentration en réactifs dans le milieu réactionnel de l'étape (E) peut varier en une assez large mesure. Typiquement, on travaille avec un extrait sec initial compris entre 5 et 80%, par exemple de 10 à 70%, plus particulièrement de 20 à 60%.

Par ailleurs, l'étape (E) est conduite sous atmosphère inerte, notamment en limitant au maximum la présence d'eau et d'oxygène dans le milieu réactionnel.

L'étape (E) est généralement conduite à pression atmosphérique, un des avantages du procédé étant qu'il ne nécessite pas, en général, une mise sous pression. Néanmoins, rien n'empêche de conduire le procédé sous pression, par exemple entre 2 et 10 bars.

Les compositions polymères à base de polyuréthanes telles qu'obtenues selon le procédé de l'invention se distinguent en particulier des compositions obtenues à partir des catalyseurs organométalliques employés dans l'état de la technique par le fait qu'elles sont sensiblement exemptes d'espèces métalliques, les compositions obtenues par le procédé selon l'invention ne contenant d'ailleurs le plus souvent aucunes espèces métalliques, même à l'état de traces, ce qui se révèle souvent avantageux notamment dans des applications telles que les vernis et les peintures industrielles.

Les compositions polymères à base de polyuréthanes telles qu'obtenues par le procédé de la présente invention ont typiquement une masse moléculaire moyenne en nombre supérieure à 500 g/mol, et le plus souvent supérieure à 1000 g/mol, par exemple supérieures à 5000 g/mol.

Dans le cas de polyuréthanes linéaires, de type solubles, cette masse moyenne moléculaire moyenne en nombre est en général comprise entre 500 et 100 000 g/mol, et le plus souvent de 1 000 à 50 000 g/mol.

Les compositions polymères à base de polyuréthanes telles qu'obtenues par le procédé de la présente invention trouvent des applications intéressantes pour la constitution de revêtements protecteurs (en particulier pour la constitution de films protecteurs), notamment pour la formulation de peintures et vernis.

Différents aspects et avantages de l'invention ressortiront encore davantage au vu des exemples illustratifs exposés ci-après.

### EXEMPLES :

Dans les exemples ci-après, on a effectué des réactions de synthèse de polyuréthane en mettant en oeuvre le procédé de l'invention, et en en utilisant le 1,3-di-tert-butylimidazol-2-ylidene à titre de carbène. Les résultats obtenus montrent que le carbène agit comme catalyseur de la réaction de polymérisation.

### Le carbène utilisé

Le 1,3-di-tert-butylimidazol-2-ylidene mis en oeuvre dans les exemples ci-après a la formule suivante :

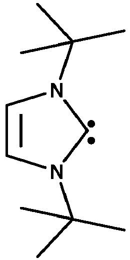

Ce carbène a été obtenu selon le protocole décrit dans le Journal of Organometallic Chemistry, vol. 617-618, pp. 242-253 (2001), en partant d'un chlorure de 1,3-di*ter*butylimidazolium tel qu'obtenu selon le protocole décrit dans le Journal of the American Chemical Society, vol. 127, pp. 3516-3526 (2005). Plus précisément, le carbène a été préparé selon le protocole ci-dessous (mis en oeuvre dans un tube de Schlenk en travaillant sous atmosphère inerte. La verrerie utilisée a été séchée par chauffage sous vide avant usage. Les différents solvants employés ont été séchés, puis distillés, avant usage) :

### • Synthèse du précurseur chlorure de 1,3-diterbutylimidazolium :

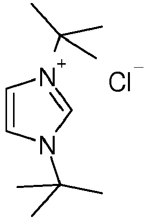

On a introduit 3 g (100 mmoles) de paraformaldéhyde et 100 mL de toluène dans un ballon qu'on a placé à 0°C.

21,2 mL (soit 200 mmoles) de *ter*butylamine ont été additionnés goutte à goutte dans le milieu maintenu sous agitation à 0°C, puis on a laissé l'agitation se poursuivre pendant 10 minutes.

On a ensuite additionné goutte à goutte et très lentement 25 mL d'une solution d'acide chlorhydrique 4N dans le dioxane, toujours en maintenant le milieu à 0°C et sous agitation. On a ensuite laissé le milieu évoluer dans ces conditions pendant 30 minutes.

Après ces 30 minutes d'agitation à 0°C, la température du milieu réactionnel a été remontée à température ambiante (25°C), puis on a ajouté goutte à goutte 11,5 mL de glyoxal sous forme d'une solution à 40% dans l'eau (soit 100 mmoles de glyoxal) au milieu toujours maintenu sous agitation. On a laissé le milieu évoluer sous agitation pendant 16 heures.

L'eau a ensuite été éliminée par Dean Stark, puis les solvants volatils ont été éliminés sous pression réduite.

On a ainsi obtenu 15 g d'un solide brun (chlorure de 1,3-di*ter*butylimidazolium incluant des traces de chlorure de tertbutylammonium), ayant les caractéristiques ci-dessous :
RMN ¹H (CDCl₃), δ (ppm) : 10,49 (tr, 1H, J= 1,7 Hz) ;
7,45 (d, 2H, J= 1,7 Hz) ;
1,73 (s, 18H).

### • synthèse du carbène à partir du précurseur :

Dans un tube de Schlenk, on a introduit 2g (soit 9.22 mmoles) du précurseur préparé dans l'étape précédente (chlorure de 1,3-diterbutyl-imidazolium) puis 15 mL de tétrahydrofurane (THF).

Le milieu réactionnel a ensuite été porté à -78°C, puis on a introduit goutte à goutte, à cette température, 8,7 mL d'une solution de n-BuLi à 1,6M dans l'hexane (soit 13,8 mmoles de n-BuLi).

Le milieu réactionnel a été laissé sous agitation à -78°C pendant 30 minutes, puis on l'a laissé remonter à température ambiante (20°C). On a ensuite laissé le milieu sous agitation à température ambiante pendant 2 heures, jusqu'à la fin du dégagement gazeux.

Le milieu est ensuite placé sous vide pour éliminer les composés volatils, et le carbène a été purifié par sublimation, ce par quoi on a obtenu 1,4 g d'une poudre cristalline blanche (rendement : 84%), ayant les caractéristiques ci-dessous :
RMN ¹H (C₆D₆), δ (ppm)□□: 6,77 (s,2H, CH); 1,51 (s, 18H, t-Bu).
RMN ¹³C (C₆D₆), δ (ppm) : 212,2 (carbène); 11,47; 55,5 31,1.

Après synthèse, le carbène a été conservé en boite à gants sous atmosphère inerte d'argon.

Le carbène ainsi obtenu a été mis en oeuvre pour la préparation de polyuréthanes) à partir :
- de toluène diisocyate (TDI) ou d'isophoronediisocyanate (IPDI) ;
   et
- de butane-1,2-diol (BD) ou de poly(éthylène glycol) (c'est-à-dire de α,ω-bis-hydroxy-poly(oxyde d'éthylène)), de masse molaire égale à 600 g/mol (PEG 600), dans les conditions exposées dans les exemples ci-après.

Dans tous les exemples, on a travaillé sous léger vide statique dans des appareillages en verre de type Schlenk immergés dans un bain d'huile préchauffé à la température souhaitée. Le solvant de polymérisation employé est le tétrahydrofurane (THF).

Avant chaque polymérisation, les monomères et le THF ont été distillés sur CaH₂ et conservés sous azote dans des tubes gradués. Le réacteur de polymérisation contenant un barreau aimanté a été préalablement séché à la flamme d'un chalumeau et transféré en boite à gants.

La quantité requise de carbène a été prélevée en boite à gants et placé dans un appareillage de type Schlenk.

La réaction de polymérisation a été conduite dans tous les cas en laissant le mélange de carbène et de monomères évoluer sous agitation magnétique à la température de travail.

Après réaction, le polymère obtenu a été récupéré par précipitation dans le pentane.

La conversion des monomères a été évaluée par gravimétrie. Les masses molaires moyennes en nombre Mₙ (g.mol⁻¹) sont exprimées en équivalents polystyrène et sont déterminées par chromatographie d'exclusion stérique (CES). Dans la plupart des exemples décrits ci-dessous, on observe une distribution multimodale des masses molaires. Les valeurs de Mₙ mentionnées dans ces exemples correspondent à la population majoritaire observée en CES. Les spectres de RMN ¹H et de RMN ¹³C des polymères ont été obtenus avec un appareil de 400 MHz (Bruker AC400) en utilisant le DMSO-d₆ comme solvant.

Dans l'exemple 7 et dans l'exemple comparatif, la disparition des fonctions isocyanate et l'apparition des fonctions carbonyles du polymère formé ont en outre été suivies en continu par infrarouge (IR) à l'aide d'une fibre optique de type Remspec dotée d'un revêtement à base de Zinc-Sélénium directement plongée dans le milieu réactionnel. On a employé une sonde reliée à un spectromètre Bruker Vector 22 mid-IR équipé du logiciel OPUS, et les données ont ensuite été retraitées avec le logiciel GRAMS/32. L'enregistrement des spectres a été réalisé avec un intervalle de 35 secondes entre deux accumulations.

### Exemple 1 : Synthèse d'un polyuréthane à partir du TDI et du BD (t = 1h30).

Dans une boite à gants rempli d'argon, 1,5 mg (6,9 x 10⁻⁶ mol) du carbène 1,3-di-tert-butylimidazol-2-ylidene et 1 mL de THF sec ont été introduits dans un premier Schlenk de 10 mL. Le Schlenk a ensuite été retiré de la boite à gants et a été connecté à une rampe à vide/azote.

Dans un autre Schlenk de 100mL équipé d'un barreau aimanté, on a introduit 10 mL de THF, 0.628 g (6.9x10⁻³ moles) de BD et g 1,21 g de TDI (6.9x10⁻³ moles) à l'aide d'une seringue. Ce second Schlenk a ensuite été placé dans un bain d'huile préchauffé à 50°C et le milieu réactionnel a été agité sous légère surpression d'azote pendant 1 h.

Le carbène contenu dans le premier Schlenk a alors été introduit dans le second Schlenk et on a laissé le milieu réactionnel ainsi formé sous agitation pendant 1h30 à 50°C.

Après précipitation de la solution par le pentane, filtration et séchage sous vide, on a obtenu un polymère de masse molaire Mn = 4700 g/mol (Ip = 3,18) et dont la caractérisation par IR révèle notamment la présence de pics à 3386 cm-1 (NH) et 1703 cm-1 (CO). La caractérisation par RMN 1H et 13C permet d'identifier les pics, respectivement, à 8.8-9.6 ppm (NH) et à 153.9 ppm (NHCOO).

### Exemple 2 : Synthèse d'un polyuréthane à partir de l'IPDI et du BD (t = 4h).

Dans une boite à gants rempli d'argon, on a pesé 4,3 mg de carbène 1,3-di-tert-butylimidazol-2-ylidene (2,38 x 10-5 mol) dans un Schlenk de 100 mL équipé d'un barreau aimanté. Le Schlenk a ensuite été retiré de la boite à gants et a été connecté à une rampe à vide/azote.

On a introduit 7 mL de THF et on a placé le réacteur dans un bain d'huile préchauffé à 50°C. On a ensuite introduit 0,4305 g de BD (4,78x10⁻³ moles) et 1,062 g d'IPDI (4,78x10⁻³ moles) à l'aide d'une seringue.

Le milieu réactionnel a été laissé sous agitation sous légère surpression d'azote pendant 4 h.

Après précipitation de la solution par le pentane, filtration et séchage sous vide, on a obtenu un polymère de masse molaire Mₙ = 3545 g/mol et dont la caractérisation par IR révèle notamment la présence de pics à 3324cm⁻¹ (NH) et 1705cm⁻¹ (CO). La caractérisation par RMN ¹H et ¹³C permet d'identifier les pics, respectivement, à 6.96 ppm (NH secondaire), à 156.9 ppm (NH**C**OO _{NCO primaire}) et à 155.46ppm (NH**C**OO- _{NCO secondaire}).

### Exemple 3 : Synthèse d'un polyuréthane à partir de l'IPDI et du BD (t = 5h).

On a employé le même protocole que dans l'exemple 2 (introduction dans le Schlenk de 4,3 mg de carbène, puis 7 mL de THF, 0,4305 g de BD, et enfin 1,062 g d'IPDI).

La réaction de polymérisation a néanmoins été conduite pendant une durée supérieure, à savoir en laissant le milieu réactionnel évoluer sous agitation pendant 5 h.

Le polymère qui a été récupéré après précipitation par le pentane a une masse molaire Mn = 3623 g/mol et dont la caractérisation par IR révèle notamment la présence de pics à 3322 cm-1 (NH) et 1710 cm⁻¹ (CO). La caractérisation par RMN ¹H et ¹³C permet d'identifier les pics, respectivement, à 6.96 ppm (NH secondaire), à 156.9 ppm (NH**C**OO _{NCO primaire}) et à 155.47ppm (NH**C**OO- _{NCO secondaire}).

### Exemple 4 : Synthèse d'un polyuréthane à partir de l'IPDI et du BD (t = 7h).

On a à nouveau reproduit le protocole de l'exemple 2 (introduction dans le Schlenk de 4,3 mg de carbène, puis 7 mL de THF, 0,4305 g de BD, et enfin 1,062 g d'IPDI), mais avec cette fois un temps de réaction de 7h.

Le polymère qui a été récupéré après précipitation par le pentane a une masse molaire Mₙ = 3783 g/mol et dont la caractérisation par IR révèle notamment la présence de pics à 3322 cm⁻¹ (NH) et 1710 cm⁻¹ (CO). La caractérisation par RMN ¹H et ¹³C permet d'identifier les pics, respectivement, à 6.96ppm (NH secondaire), à 156.9 ppm (NH**C**OO _{NCO primaire}) et à 155.42 ppm (NH**C**OO- _{NCO secondaire}).

### Exemple 5 : Synthèse d'un polyuréthane à partir de l'IPDI et du PEG 600 (t = 4h).

Selon le même protocole que dans l'exemple 2, le Schlenk contenant 4,3 mg de carbène 1,3-di-tert-butylimidazol-2-ylidene (2.38x10⁻⁵ mol), 7 mL de THF, 0.4305 g de PEG600 (4.78x10⁻³ moles) et 1.062 g d'IPDI (4.78x10⁻³ moles) est placé dans un bain d'huile préchauffé à 50°C pendant 4 h.

Après récupération comme indiqué ci-dessus, on obtient un polymère de masse molaire Mₙ = 8700 g/mol (Ip = 1,68) et dont la caractérisation par IR révèle notamment la présence de pics à 3322cm⁻¹ (NH) et 1710 cm⁻¹ (CO). La caractérisation par RMN 1H et 13C permet d'identifier les pics, respectivement, à 6.96ppm (NH secondaire), à 156.9 ppm (NH**C**OO _{NCO primaire}) et à 155.42ppm (NH**C**OO- _{NCO secondaire}).

### Exemple 6 : Synthèse d'un polyuréthane à partir de l'IPDI et du BD (t = 6h).

On a à nouveau reproduit le protocole de l'exemple 2 (introduction dans le Schlenk de 4,3 mg de carbène, puis 7 mL de THF, 0,4305 g de BD, et enfin 1,062 g d'IPDI), mais avec cette fois un temps de réaction de 6 h.

Le polymère qui a été récupéré après précipitation par le pentane a une masse molaire Mₙ = 3977 g/mol et dont la caractérisation par IR révèle notamment la présence de pics à 3326cm⁻¹ (NH) et 1705cm⁻¹ (CO). La caractérisation par RMN 1H et 13C permet d'identifier les pics, respectivement, à 6.92 ppm (NH secondaire), à 156.9 ppm (NH**C**OO _{NCO primaire}) et à 155.42ppm (NH**C**OO- _{NCO secondaire}).

### Exemple 7 : synthèse d'un polyuréthane à partir de l'IPDI et du BD - suivi par spectrométrie IR

En boite à gants, sous argon, on a introduit dans un Schlenk de 10 mL 4,3 mg (2,38 x 10⁻⁵ mol) du carbène et 2 mL de THF. Le Schlenk a ensuite été retiré de la boite à gants et a été connecté à un tricol muni d'un barreau aimanté lui-même connecté à une rampe à vide/azote.

On a introduit une sonde IR est introduite dans ce réacteur par un des cols.

On a alors introduit 5 mL de THF dans le tricol, puis 0,4305 g de BD (4,78x10⁻³ moles) et enfin 1,062 g d'IPDI (4,78x10⁻³ moles).

Le tricol contenant le mélange réactionnel a alors été placé dans un bain d'huile préchauffé à 50°C pendant 7 h.

Le polymère qui a été récupéré après précipitation par le pentane a une masse molaire Mₙ = 3783 g/mol et dont la caractérisation par IR révèle notamment la présence de pics à 3326cm⁻¹ (NH) et 1705cm⁻¹ (CO). La caractérisation par RMN 1H et 13C permet d'identifier les pics, respectivement, à 6.92 ppm (NH secondaire), à 156.9 ppm (NH**C**OO _{NCO primaire}) et à 155.42ppm (NH**C**OO- _{NCO secondaire}).

### Exemple Comparatif : mise en contact d'IPDI et du BD sans catalyseur.

On a reproduit le protocole de l'exemple 2, mais sans introduire de carbène dans le milieu, à savoir en faisant réagir 0,4305 g de BD (4,78x10⁻³ moles) et 1,062 g d'IPDI (4,78x10⁻³ moles) = dans un tricol muni d'un barreau aimanté et de la sonde IR. Le mélange réactionnel a été placé dans un bain d'huile préchauffé à 50°C pendant 4 h.

Dans ces conditions, on n'a pas observé pas la formation de polymère en spectrométrie IR, où aucun pic caractéristique de la formation de liens uréthane n'est observé.

## Revendications

1. Procédé de préparation d'un composé comprenant au moins un groupe uréthane -HN-C(=O)-O, ledit procédé comprenant une étape (E) dans laquelle on fait réagir un composé (I) porteur de deux fonctions isocyanate -N=C=O avec un composé organique (II) porteur de deux groupements hydroxyle -OH, cette réaction étant effectuée en présence d'un carbène (III) utilisé à titre de catalyseur, le carbène (III) répondant à la formule générale (III-1) ci-dessous : 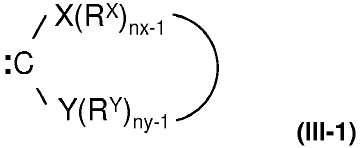 dans laquelle :
• X est un atome d'azote,
• Y est un hétéroatome choisi parmi N, S, P, Si et O,
• nx est 3,
• ny est un entier égal à la valence de l'hétéroatome Y ;
• chacun des groupes R^{X} et R^{Y} liés aux hétéroatomes X et Y représente, indépendamment des autres groupes, une chaîne hydrocarbonée, linéaire ou ramifiée, éventuellement cyclisée en tout ou partie, et éventuellement substituée, cette chaîne étant de préférence :
- un groupe alkyle, alcényle ou alcynyle, linéaire ou ramifié éventuellement substitué, par exemple par au moins un groupe perfluoroalkyle,
- un groupe perfluoroalkyle, linéaire ou ramifié ;
- un groupe cycloalkyle, éventuellement substitué, par exemple par au moins un groupe alkyle ou alcoxy ;
- un groupe aryle éventuellement substitué, par exemple par au moins un groupe alkyle ou alcoxy ;
- un groupe alkylaryle ou arylalkyle, où la partie aryle est éventuellement substituée, par exemple par au moins un groupe alkyle ou alcoxy,
étant entendu qu'un des groupes R^{X} porté par l'hétéroatome X et un des groupes R^{Y} porté par l'hétéroatome Y peuvent éventuellement être lié ensemble pour former un hétérocycle avec les hétéroatomes X et Y et le carbone divalent porteur de deux électrons non liants,
l'étape (E) étant conduite sous atmosphère inerte à une température allant de 10 à 80°C, par exemple allant de 15 à 60°C.

2. Procédé selon la revendication 1, pour la préparation d'un polyuréthane solubilisable à partir de composés (I) aromatiques, dans lequel l'étape (E) comprend l'addition d'un composé (I) aromatique ayant exactement deux groupes isocyanate dans un pied de cuve où on a préalablement mélangé un composé (II) comportant exactement deux OH avec un carbène (III), le ratio molaire carbène/NCO de la quantité totale de carbène introduite rapporté à la quantité totale de fonctions isocyanate -NCO introduite étant inférieur à 0,002, et où, de préférence :
- le ratio molaire carbène/NCO est inférieur à 0,0015
- l'étape (E) est conduite à moins de 40°C ;

3. Procédé selon la revendication 1, pour la préparation d'un polyuréthane solubilisable à partir de composés (I) aromatiques, dans lequel : le procédé comprend une étape (E⁰) préalable à l'étape (E), dans laquelle on fait réagir des composés (I) aromatiques ayant exactement deux groupes isocyanate -NCO et des composés (II) ayant exactement deux groupes hydroxyle -OH, en l'absence de carbène, l'étape (E) étant ensuite conduite en ajoutant au milieu obtenu à l'issue de l'étape (E⁰) le carbène (III), avec éventuellement une addition conjointe de composés (I) et/ou (II) additionnels, identiques ou différents de ceux mis en oeuvre dans l'étape (E⁰), le ratio molaire carbène/NCO étant de préférence inférieur à 0,05.

4. Procédé selon la revendication 3, pour la préparation d'un polyuréthane linéaire à structure séquencée, où, dans ladite étape (E⁰), on utilise les composés (I) et (II) avec un ratio molaire NCO/OH supérieur à 1, et, dans l'étape (E) on ajoute des composés dihydroxylés (II) distincts de ceux de l'étape (E⁰).

5. Procédé selon l'une des revendications 1 à 4, dans lequel le carbène (III) répond à l'une des formules générales (III-1.1) ou (III-1.1') ci-dessous : 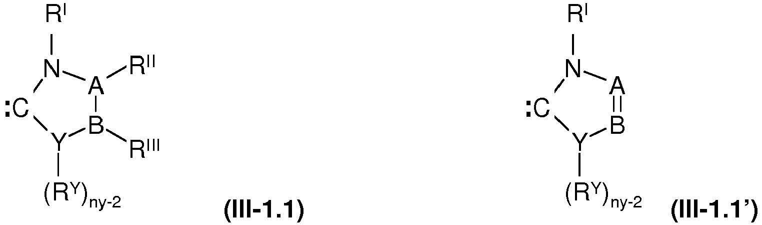 dans lesquelles :
• Y est un hétéroatome choisi parmi N, S, P, Si et O, Y étant de préférence un atome d'azote ;
• ny et R^{Y} sont tels que définis pour la Formule (III) ; et
• R^{I} désigne une chaîne hydrocarbonée, linéaire ou ramifiée, éventuellement cyclisée en tout ou partie, et éventuellement substituée, cette chaîne étant de préférence :
- un groupe alkyle, alcényle ou alcynyle, linéaire ou ramifié éventuellement substitué, par exemple par au moins un groupe perfluoroalkyle,
- un groupe perfluoroalkyle, linéaire ou ramifié ;
- un groupe cycloalkyle, éventuellement substitué, par exemple par au moins un groupe alkyle ou alcoxy ;
- un groupe aryle éventuellement substitué, par exemple par au moins un groupe alkyle ou alcoxy ;
- un groupe alkylaryle ou arylalkyle, où la partie aryle est éventuellement substituée, par exemple par un groupe alkyle ou alcoxy
• A désigne un atome d'azote ou un groupement CR^{IIa},
• B désigne un atome d'azote ou un groupement CR^{IIIa},
• R^{II} et R^{III}, et ; le cas échéant, R^{IIa} et R^{IIIa}, identiques ou différents, désignent chacun un atome d'hydrogène, ou bien une chaîne hydrocarbonée, linéaire ou ramifiée, éventuellement cyclisée en tout ou partie, et éventuellement substituée, cette chaîne hydrocarbonée étant de préférence :
- un groupe alkyle, alcényle ou alcynyle, linéaire ou ramifié éventuellement substitué, par exemple par au moins un groupe perfluoroalkyle,
- un groupe perfluoroalkyle, linéaire ou ramifié ;
- un groupe cycloalkyle, éventuellement substitué, par exemple par au moins un groupe alkyle ou alcoxy ;
- un groupe aryle éventuellement substitué, par exemple par au moins un groupe alkyle ou alcoxy ;
- un groupe alkylaryle ou arylalkyle, où la partie aryle est éventuellement substituée, notamment par au moins un groupe alkyle ou alcoxy.

6. Procédé selon la revendication 5, dans lequel le carbène (III) répond à la formule générale (III-1.1a) ou (III-1.1a') ci-dessous : 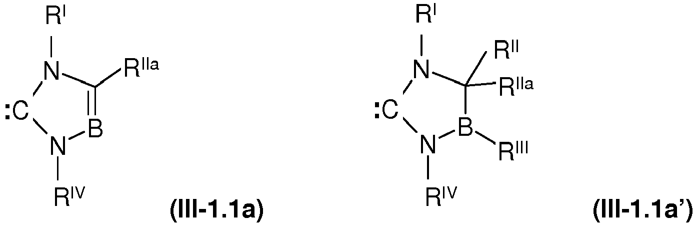 dans lesquelles :
• R^{I}, R^{II}, R^{IIa}, R^{III} et B sont tels que définis dans la revendication 5; et
• R^{IV} désigne une chaîne hydrocarbonée, linéaire ou ramifiée, éventuellement cyclisée en tout ou partie, et éventuellement substituée, cette chaîne étant de préférence :
- un groupe alkyle, alcényle ou alcynyle, linéaire ou ramifié éventuellement substitué, par exemple par au moins un groupe perfluoroalkyle,
- un groupe perfluoroalkyle, linéaire ou ramifié ;
- un groupe cycloalkyle, éventuellement substitué, par exemple par au moins un groupe alkyle ou alcoxy ;
- un groupe aryle éventuellement substitué, par exemple par au moins un groupe alkyle ou alcoxy ;
- un groupe alkylaryle ou arylalkyle, où la partie aryle est éventuellement substituée, notamment par au moins un groupe alkyle ou alcoxy,
le carbène (III) répondant de préférence à la formule générale (III-1.1a).

7. Procédé selon l'une quelconque des revendications 1 à 6, dans lequel
∘ le carbène (III) est formé *in situ* dans le milieu de l'étape (E), à partir d'au moins un précurseur (PC) dudit carbène, ledit précurseur étant:
- un carbène sous forme dimérisée, qui est clivé en deux carbènes *in situ* par activation thermique, ce carbène dimérisé répondant avantageusement à la formule (PC_{D}) suivante : 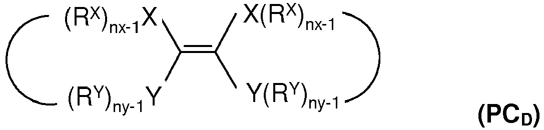 où X, Y, nx, ny, R^{X} et R^{Y} sont tels que définis dans la revendication 1 ;
ou bien
- un sel d'imidazolium, qui forme un carbène *in situ* par réaction avec une base, ce sel d'imidazolium répondant avantageusement à l'une des formule (PC_{S}) ou (PC_{S}') suivantes : 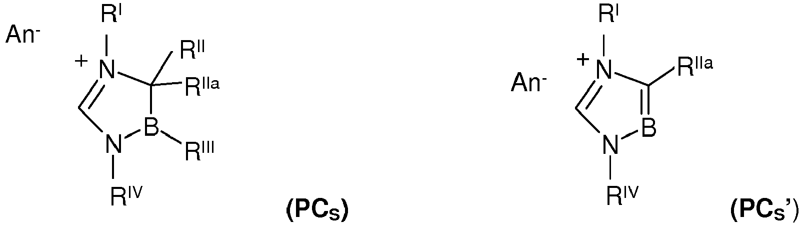 où :
B, R^{I}, R^{II}, R^{III} et R^{IV} sont tels que définis dans la revendication 5; et
An⁻ est un anion dérivé d'un acide de Brönsted, avantageusement un anion carboxylate, sulfate, hydrogénosulfate, sulfonate, phosphate, hydrogénophosphate, halogénure, perchlorate ou borate ;
- un adduit de carbène et d'alcool, qui libère *in situ* le carbène lorsqu'il est traité thermiquement,
ou bien
∘ le carbène (III) est un carbène encapsulé, mélangé physiquement à un polymère lui servant de gangue protectrice

8. Procédé selon l'une quelconque des revendications 1 à 7, dans lequel le composé (I) mis en oeuvre dans l'étape (E) répond à la formule (I-1) suivante :
**O=C=N-R^{I}-N=C=O** **(I-1)**
dans laquelle R^{I} est un groupe alkylène, cycloalkylène ou arylène, ou un groupement divalent contenant un enchaînement de tels groupes,

9. Procédé selon la revendication 8, dans le composé (I) mis en oeuvre dans l'étape (E)est choisi parmi :
- Le toluène diisocyanate (TDI),
- l'isophoronediisocyanate (IPDI),
- l'hexaméthylènediisocyanate (HDI),
- le diphénylméthanediisocyanate (MDI),
- le dicyclohexylméthanediisocyanate (DCI),
- Le naphtalène 1,5-diisocyanate (NDI),
- le p-phenylène diisocyanate (PPDI),
- le 3,3'-diméthyldiphenyl-4, 4'-diisocyanate (DDDI),
- le 4,4'-dibenzyl diisocyanate (DBDI).

10. Procédé selon l'une des revendications 1 à 9, où, dans l'étape (E) :
- le ratio molaire NCO/OH, correspondant à la quantité de fonctions isocyanate introduites rapporté à la quantité de fonctions alcool introduites, est compris entre 0,8 à 1,2 ; et/ou
- le ratio molaire carbène/NCO, correspondant à la quantité de carbène introduit rapporté à la quantité de fonctions isocyanate introduites, est compris entre 0,0001 et 0,05.

## Patentansprüche

1. Verfahren zur Herstellung einer Verbindung, umfassend mindestens eine Urethangruppe -HN-C(=O)-O, wobei das Verfahren einen Schritt (E) umfasst, bei dem man eine Verbindung (I), die zwei Isocyanatfunktionen N=C=O trägt, mit einer organischen Verbindung (II), die zwei Hydroxylgruppen OH trägt, reagieren lässt, wobei diese Reaktion in Gegenwart eines als Katalysator verwendeten Carbens (III) erfolgt, wobei das Carben (III) der nachstehenden allgemeinen Formel (III-1) entspricht: 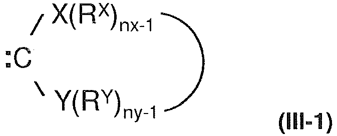 wobei:
• X ein Stickstoffatom ist,
• Y ein Heteroatom ist, ausgewählt aus N, S, P, Si und O,
• nx gleich 3 ist,
• ny eine Ganzzahl gleich der Wertigkeit des Heteroatoms Y ist;
• jede der an die Heteroatome X und Y gebundenen Gruppen R^{X} und R^{Y} unabhängig von den anderen Gruppen für eine lineare oder verzweigte, möglicherweise ganz oder teilweise cyclisierte und möglicherweise substituierte Kohlenwasserstoffkette steht, wobei diese Kette bevorzugt ist:
- eine Alkyl-, Alkenyl- oder Alkynylgruppe, linear oder verzweigt, möglicherweise substituiert, beispielsweise durch mindestens eine Perfluoralkylgruppe,
- eine Perfluoralkylgruppe, linear oder verzweigt;
- eine Cycloalkylgruppe, möglicherweise substituiert, beispielsweise durch mindestens eine Alkyl- oder Alkoxygruppe;
- eine Arylgruppe, möglicherweise substituiert, beispielsweise durch mindestens eine Alkyl- oder Alkoxygruppe;
- eine Alkylaryl- oder Arylalkylgruppe, wobei der Arylteil möglicherweise substituiert ist, beispielsweise durch mindestens eine Alkyl- oder Alkoxygruppe,
vorausgesetzt, dass eine der von dem Heteroatom X getragenen Gruppen R^{X} und eine der von dem Heteroatom Y getragenen Gruppen R^{Y} möglicherweise zusammen verbunden sein können, um einen Heterocyclus mit den Heteroatomen X und Y und dem zweiwertigen Kohlenstoff, der zwei nichtbindende Elektronen trägt, zu bilden, wobei der Schritt (E) unter einer inerten Atmosphäre bei einer Temperatur von 10 bis 80 °C, beispielsweise von 15 bis 60 °C, durchgeführt wird.

2. Verfahren nach Anspruch 1 zur Herstellung eines solubilisierbaren Polyurethans aus aromatischen Verbindungen (I), wobei der Schritt (E) das Zusetzen einer aromatischen Verbindung (I) mit genau zwei Isocyanatgruppen in einem Ansatz umfasst, bei dem im Vorfeld eine Verbindung (II) mit genau zwei OH mit einem Carben (III) vermischt wurde, wobei das Molverhältnis Carben/NCO der Gesamtmenge des eingeführten Carbens im Verhältnis zur Gesamtmenge der eingeführten Isocyanatfunktionen -NCO unter 0,002 liegt, und wobei bevorzugt:
- das Molverhältnis Carben/NCO unter 0,0015 liegt
- der Schritt (E) bei weniger als 40 °C durchgeführt wird;

3. Verfahren nach Anspruch 1 zur Herstellung eines solubilisierbaren Polyurethans aus aromatischen Verbindungen (I), wobei: das Verfahren einen Schritt (E⁰) vor dem Schritt (E) umfasst, wobei man aromatische Verbindungen (I) mit genau zwei Isocyanatgruppen -NCO und Verbindungen (II) mit genau zwei Hydroxylgruppen -OH in Abwesenheit von Carben reagieren lässt, wobei der Schritt (E) anschließend durchgeführt wird, indem dem am Ende des Schritts (E⁰) erhaltenen Medium das Carben (III) zugesetzt wird, möglicherweise unter gemeinsamer Zugabe der zusätzlichen Verbindungen (I) und/oder (II), die identisch mit oder verschieden von jenen sind, die in Schritt (E⁰) durchgeführt wurden, wobei das Molverhältnis Carben/NCO bevorzugt unter 0,05 liegt.

4. Verfahren nach Anspruch 3 zur Herstellung eines linearen Polyurethans mit sequenzierter Struktur, wobei in dem Schritt (E⁰) die Verbindungen (I) und (II) mit einem Molverhältnis NCO/OH über 1 verwendet werden und in Schritt (E) Dihydroxyverbindungen (II) zugesetzt werden, die verschieden von jenen des Schritts (E⁰) sind.

5. Verfahren nach einem der Ansprüche 1 bis 4, wobei das Carben (III) einer der nachstehenden allgemeinen Formeln (III-1.1) oder (III-1.1') entspricht: 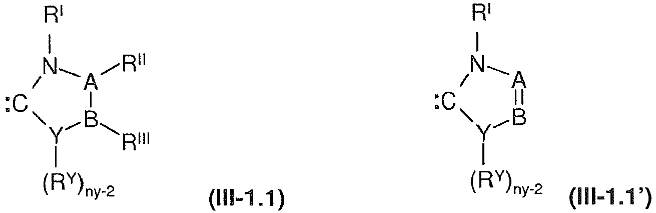 wobei:
• Y ein Heteroatom ist, ausgewählt aus N, S, P, Si und O, Y bevorzugt ein Stickstoffatom ist;
• ny und R^{Y} wie für die Formel (III) definiert sind; und
• R^{I} eine lineare oder verzweigte, möglicherweise ganz oder teilweise cyclisierte und möglicherweise substituierte Kohlenwasserstoffkette bezeichnet, wobei diese Kette bevorzugt ist:
- eine Alkyl-, Alkenyl- oder Alkynylgruppe, linear oder verzweigt, möglicherweise substituiert, beispielsweise durch mindestens eine Perfluoralkylgruppe,
- eine Perfluoralkylgruppe, linear oder verzweigt;
- eine Cycloalkylgruppe, möglicherweise substituiert, beispielsweise durch mindestens eine Alkyl- oder Alkoxygruppe;
- eine Arylgruppe, möglicherweise substituiert, beispielsweise durch mindestens eine Alkyl- oder Alkoxygruppe;
- eine Alkylaryl- oder Arylalkylgruppe, wobei der Arylteil möglicherweise substituiert ist, beispielsweise durch eine Alkyl- oder Alkoxygruppe
• A ein Stickstoffatom oder eine CR-Gruppierung^{IIa} bezeichnet,
• B ein Stickstoffatom oder eine CR-Gruppierung^{IIIa} bezeichnet,
• R^{II} und R^{III}, und gegebenenfalls R^{IIa} und R^{IIIa}, identisch oder verschieden, jeweils ein Wasserstoffatom oder eine lineare oder verzweigte, möglicherweise ganz oder teilweise cyclisierte und möglicherweise substituierte Kohlenwasserstoffkette bezeichnen, wobei diese Kohlenwasserstoffkette bevorzugt ist:
- eine Alkyl-, Alkenyl- oder Alkynylgruppe, linear oder verzweigt, möglicherweise substituiert, beispielsweise durch mindestens eine Perfluoralkylgruppe,
- eine Perfluoralkylgruppe, linear oder verzweigt;
- eine Cycloalkylgruppe, möglicherweise substituiert, beispielsweise durch mindestens eine Alkyl- oder Alkoxygruppe;
- eine Arylgruppe, möglicherweise substituiert, beispielsweise durch mindestens eine Alkyl- oder Alkoxygruppe;
- eine Alkylaryl- oder Arylalkylgruppe, wobei der Arylteil möglicherweise substituiert ist, insbesondere durch mindestens eine Alkyl- oder Alkoxygruppe,

6. Verfahren nach Anspruch 5, wobei das Carben (III) die nachstehende allgemeine Formel (III-1.1a) oder (III-1.1a') aufweist: 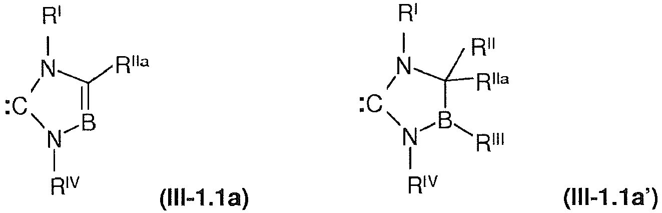 wobei:
• R^{I}, R^{II}, R^{IIa}, R^{III} und B wie in Anspruch 5 definiert sind; und
• R^{IV} eine lineare oder verzweigte, möglicherweise ganz oder teilweise cyclisierte und möglicherweise substituierte Kohlenwasserstoffkette bezeichnet, wobei diese Kette bevorzugt ist:
- eine Alkyl-, Alkenyl- oder Alkynylgruppe, linear oder verzweigt, möglicherweise substituiert, beispielsweise durch mindestens eine Perfluoralkylgruppe,
- eine Perfluoralkylgruppe, linear oder verzweigt;
- eine Cycloalkylgruppe, möglicherweise substituiert, beispielsweise durch mindestens eine Alkyl- oder Alkoxygruppe;
- eine Arylgruppe, möglicherweise substituiert, beispielsweise durch mindestens eine Alkyl- oder Alkoxygruppe;
- eine Alkylaryl- oder Arylalkylgruppe, wobei der Arylteil möglicherweise substituiert ist, insbesondere durch mindestens eine Alkyl- oder Alkoxygruppe,
wobei das Carben (III) bevorzugt die allgemeine nachstehende Formel (III-1.1a) aufweist.

7. Verfahren nach einem der Ansprüche 1 bis 6, wobei
• das Carben (III) *in situ* in dem Medium des Schritts (E) anhand mindestens eines Vorläufers (PC) des Carbens gebildet wird, wobei der Vorläufer ist:
- ein Carben in dimerisierter Form, das *in situ* durch thermische Aktivierung in zwei Carbene gespalten ist, wobei dieses dimerisierte Carben vorteilhafterweise der folgenden Formel (PC_{D}) entspricht: 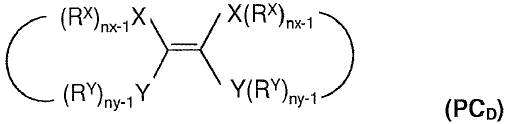 wobei X, Y, nx, ny, R^{X} und R^{Y} wie in Anspruch 1 definiert sind;
oder
- ein Imidazolsalz, das *in situ* ein Carben durch Reaktion mit einer Base bildet, wobei dieses Imidazolsalz vorteilhafterweise einer der folgenden Formeln (PC_{S}) oder (PC_{S}') entspricht: 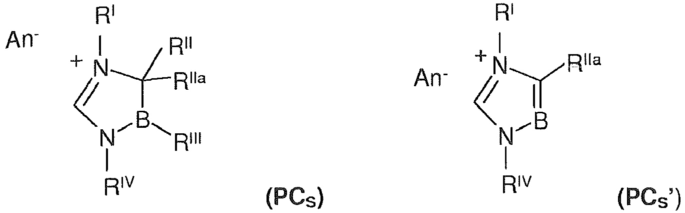 wobei:
B, R^{I}, R^{II}, R^{III} und R^{IV} wie in Anspruch 5 definiert sind; und
An⁻ ein von einer Säure nach Brönsted abgeleitetes Anion ist, vorteilhafterweise ein Carboxylat-, Sulfat-, Hydrogensulfat-, Sulfonat-, Phosphat-, Hydrogenphosphat-, Halogenid-, Perchlorat- oder Borat-Anion ist;
- ein Carben- und Alkohol-Addukt ist, das *in situ* das Carben freisetzt, wenn es thermisch behandelt wird,
oder
• das Carben (III) ein verkapseltes Carben ist, das physikalisch mit einem Polymer vermischt ist, das ihm als Schutzhülle dient

8. Verfahren nach einem der Ansprüche 1 bis 7, wobei die in Schritt (E) durchgeführte Verbindung (I) die folgende Formel (I-1) aufweist:
**O=C=N-R^{I}-N=C=O** **(I-1)**
wobei R^{I} eine Alkylen-, Cycloalkylen- oder Arylengruppe oder eine zweiwertige Gruppierung mit einer Verkettung solcher Gruppen ist.

9. Verfahren nach Anspruch 8, wobei die in Schritt (E) ausgeführte Verbindung (I) ausgewählt ist aus:
- dem Toluoldiisocyanat (TDI),
- dem Isophorondiisocyanat (IPDI),
- dem Hexamethylendiisocyanat (HDI),
- dem Diphenylmethandiisocyanat (MDI),
- dem Dicyclohexylmethandiisocyanat (DCI),
- dem Naphthalin-1,5-diisocyanat (NDI),
- dem p-Phenylendiisocyanat (PPDI),
- dem 3,3'-Dimethyldiphenyl-4,4'-diisocyanat (DDDI),
- dem 4,4'-Dibenzyldiisocyanat (DBDI).

10. Verfahren nach einem der Ansprüche 1 bis 9, wobei in Schritt (E):
- das Molverhältnis NCO/OH, das der Menge der eingeführten Isocyanatfunktionen im Verhältnis zur Menge der eingeführten Alkoholfunktionen entspricht, bei 0,8 bis 1,2 liegt; und/oder
- das Molverhältnis Carben/NCO, das der Menge des eingeführten Carbens im Verhältnis zur Menge der eingeführten Isocyanatfunktionen entspricht, bei 0,0001 bis 0,05 liegt.

## Claims

1. A method for preparing a compound comprising at least one urethane group -HN-C(=O)-O, said method comprising a step (E) in which a compound (I) having two isocyanate functional groups N=C=O is reacted with an organic compound (II) having two hydroxyl groups -OH, this reaction being carried out in the presence of a carbene (III) used as a catalyst, the carbene (III) corresponding to the general formula (III-1) below: 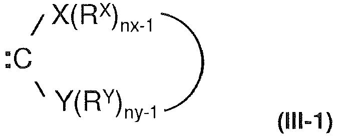 wherein:
• X is a nitrogen atom,
• Y is a heteroatom selected from N, S, P, Si and O,
• nx is 3,
• ny is an integer equal to the valence of the heteroatom Y;
• each of the groups R^{X} and R^{Y} linked to the heteroatoms X and Y represents, independently of the other groups, a linear or branched hydrocarbon chain, optionally fully or partially cyclised, and optionally substituted, this chain being preferably:
- a linear or branched alkyl, alkenyl or alkynyl group, optionally substituted, for example by at least one perfluoroalkyl group,
- a linear or branched perfluoroalkyl group;
- a cycloalkyl group, optionally substituted, for example by at least one alkyl or alkoxy group;
- an aryl group, optionally substituted, for example by at least one alkyl or alkoxy group;
- an alkylaryl or arylalkyl group, where the aryl part is optionally substituted, for example by at least one alkyl or alkoxy group,
it being understood that one of the groups R^{X} borne by the heteroatom X and one of the groups R^{Y} borne by the heteroatom Y may optionally be linked together to form a heterocycle with the heteroatoms X and Y and the divalent carbon bearing two non-bonding electrons, the step (E) being carried out under an inert atmosphere from 10 to 80°C, for example, from 15 to 60°C.

2. The method according to claim 1 for preparing a solubilisable polyurethane from aromatic compounds (I), wherein step (E) comprises the addition of an aromatic compound (I) having exactly two isocyanate groups to a starter where a compound (II) having exactly two OH groups has been mixed in advance with a carbene (III), the carbene/NCO molar ratio of the total quantity of carbene introduced relative to the total quantity of isocyanate functional groups -NCO introduced being less than 0.002, and where, preferably:
- the carbene/NCO molar ratio is less than 0.0015
- step (E) is carried out at less than 40°C;

3. The method according to claim 1 for preparing a solubilisable polyurethane from aromatic compounds (I), wherein: the method comprises a step (E⁰) prior to step (E), wherein the aromatic compounds (I) having exactly two isocyanate groups -NCO and compounds (II) having exactly two hydroxyl groups -OH are reacted in the absence of carbene, step (E) then being carried out by adding the carbene (III) to the medium obtained from step (E⁰), optionally with a co-addition of additional compounds (I) and/or (II), identical or different to those implemented in step (E⁰), the carbene/NCO molar ratio being preferably less than 0.05.

4. The method according to claim 3 for preparing a linear polyurethane with a sequenced structure, wherein said step (E⁰), compounds (I) and (II) with an NCO/OH molar ratio greater than 1 are used, and in step (E), dihydroxyl compounds (II) different from those of step (E⁰) are added.

5. The method according to any claim 1 to 4, wherein the carbene (III) corresponds to one of the general formulas (III-1.1) or (III-1.1') below: 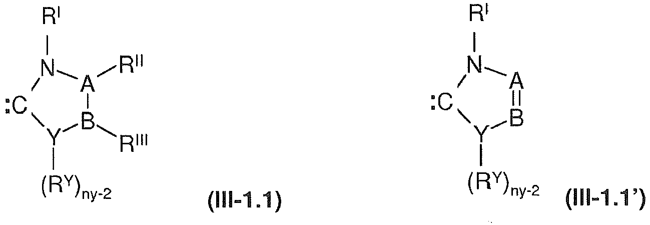 wherein:
• Y is a heteroatom selected from N, S, P, Si and O, Y being preferably a nitrogen atom;
• ny and R^{Y} are as defined for Formula (III); and
• R^{I} designates a linear or branched hydrocarbon chain, optionally fully or partially cyclised, and optionally substituted, this chain preferably being:
- a linear or branched alkyl, alkenyl or alkynyl group, optionally substituted, for example by at least one perfluoroalkyl group,
- a linear or branched perfluoroalkyl group;
- a cycloalkyl group, optionally substituted, for example by at least one alkyl or alkoxy group;
- an aryl group, optionally substituted, for example by at least one alkyl or alkoxy group;
- an alkylaryl or arylalkyl group, where the aryl part is optionally substituted, for example by an alkyl or alkoxy group;
• A designates a nitrogen atom or a CR^{IIa} group,
• B designates a nitrogen atom or a CR^{IIIa} group,
• R^{II} and R^{III}, and, if necessary, R^{IIa} and R^{IIIa}, which can be identical or different, each designate a hydrogen atom, or a linear or branched hydrocarbon chain, optionally fully or partially cyclised, and optionally substituted, this hydrocarbon chain preferably being:
- a linear or branched alkyl, alkenyl or alkynyl group, optionally substituted, for example by at least one perfluoroalkyl group,
- a linear or branched perfluoroalkyl group;
- a cycloalkyl group, optionally substituted, for example by at least one alkyl or alkoxy group;
- an aryl group, optionally substituted, for example by at least one alkyl or alkoxy group;
- an alkylaryl or arylalkyl group, where the aryl part is optionally substituted, notably by at least one alkyl or alkoxy group.

6. The method according to claim 5, wherein the carbene (III) corresponds to the general formula (III-1.1a) or (III-1.1a') below: 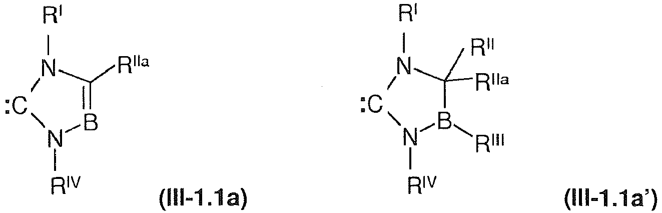 wherein:
• R^{I}, R^{II}, R^{IIa}, R^{III} and B are as defined in claim 5; and
• R^{IV} designates a linear or branched hydrocarbon chain, optionally fully or partially cyclised, and optionally substituted, this chain preferably being:
- a linear or branched alkyl, alkenyl or alkynyl group, optionally substituted, for example by at least one perfluoroalkyl group,
- a linear or branched perfluoroalkyl group;
- a cycloalkyl group, optionally substituted, for example by at least one alkyl or alkoxy group;
- an aryl group, optionally substituted, for example by at least one alkyl or alkoxy group;
- an alkylaryl or arylalkyl group, where the aryl part is optionally substituted, notably by at least one alkyl or alkoxy group,
the carbene (III) preferably corresponding to the general formula (III-1.1a).

7. The method according to any claim 1 to 6, wherein
• the carbene (III) is formed *in situ* in the medium of step (E), from at least one precursor (PC) of said carbene, said precursor being:
- a carbene in dimerised form, which is split into two carbenes *in situ* by thermal activation, this dimerised carbene corresponding advantageously to the following formula (PC_{D}): 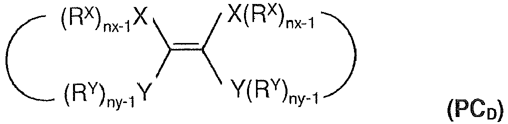 where X, Y, nx, ny, R^{X} and R^{Y} are as defined in claim 1;
or
- an imidazolium salt which forms a carbene *in situ* by reaction with a base, this imidazolium salt advantageously corresponding to one of the following formulae (PC_{S}) or (PCs'): 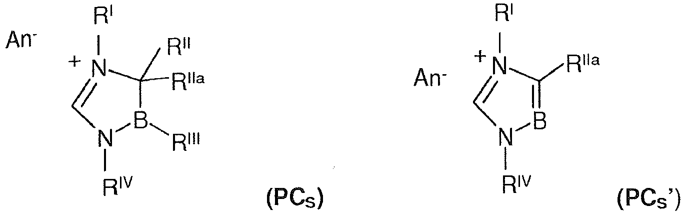 wherein:
B, R^{I}, R^{II}, R^{III} and R^{IV} are as defined in claim 5; and
An⁻ is an anion derived from a Bronsted acid, advantageously a carboxylate, sulphate, hydrogen sulphate, sulphonate, phosphate, hydrogen phosphate, halide, perchlorate or borate anion;
- a carbene and alcohol adduct, which releases the carbene *in situ* when it is thermally treated,
or
• the carbene (III) is an encapsulated carbene, physically mixed with a polymer serving as a protective matrix.

8. The method according to any claim 1 to 7, wherein the compound (I) implemented in step (E) corresponds to the following formula (I-1):
**O=C=N-R^{I}-N=C=O** **(I-1)**
wherein R^{I} is an alkylene, cycloalkylene, or arylene group, or a divalent group containing a concatenation of such groups.

9. The method according to claim 8, wherein compound (I) implemented in step (E) is selected from:
- toluene diisocyanate (TDI),
- isophorone diisocyanate (IPDI),
- hexamethylene diisocyanate (HDI),
- diphenylmethane diisocyanate (MDI),
- dicyclohexylmethane diisocyanate (DCI),
- naphthalene-1,5-diisocyanate (NDI),
- p-phenylene diisocyanate (PPDI),
- 3,3'-dimethyldiphenyl-4,4'-diisocyanate (DDDI),
- 4,4'-dibenzyl diisocyanate (DBDI).

10. The method according to any claim 1 to 9, where, in step (E):
- the NCO/OH molar ratio, corresponding to the quantity of isocyanate functional groups introduced relative to the quantity of alcohol functional groups introduced, is between 0.8 and 1.2; and/or
- the carbene/NCO molar ratio, corresponding to the quantity of carbene introduced relative to the quantity of isocyanate functional groups introduced, is between 0.0001 and 0.05.
